# EUROPÄISCHE PATENTSCHRIFT

(11) **EP 2 768 684 B1**
(45) Veröffentlichungstag und Bekanntmachung des Hinweises auf die Patenterteilung: **21.12.2016**
(21) Anmeldenummer: 12769683.9
(22) Anmeldetag: 10.10.2012
(51) Int. Cl.: B60G 17/052

(54) **KOMPRESSORSCHALTUNG FÜR EINE PNEUMATISCHE REGELVORRICHTUNG EINES FAHRZEUGS**
COMPRESSOR CIRCUIT FOR A PNEUMATIC CONTROL DEVICE OF A MOTOR VEHICLE
CIRCUIT DE COMPRESSEUR POUR UN DISPOSITIF DE RÉGULATION PNEUMATIQUE D'UN VÉHICULE

(30) Priorität: 20.10.2011 DE 102011084921
(43) Veröffentlichungstag der Anmeldung: 27.08.2014
(73) Patentinhaber: Continental Teves AG&Co. Ohg, 60488 Frankfurt (DE)
(72) Erfinder: HEIN, Dierk, 30900 Wedemark (DE)
(86) Internationale Anmeldenummer: PCT/EP2012/070046
(87) Internationale Veröffentlichungsnummer: WO 2013/057021

(56) Entgegenhaltungen:
- EP-A1- 0 530 366
- EP-A2- 1 243 447
- FR-A1- 2 820 090
- US-A1- 2009 079 155

## Beschreibung

Die Erfindung betrifft eine Kompressorschaltung für eine pneumatische Regelvorrichtung eines Fahrzeugs.

Den bisherigen Stand der Technik für pneumatische Regelvorrichtungen eines Fahrzeugs geben folgende Druckschriften wieder:
DE 102 40 357 A1,
EP 1 243 447 A2,
DE 100 55 108 A1,
DE 102 008 034 240 A1.

So zeigt z.B. die EP 0 530 366 A1, die als nächstliegender Stand der Technik betrachtet wird, einen Druckregler, der zwischen der Eingangsseite des Kompressors und der pneumatischen Regelvorrichtung angeordnet ist.

Demgegenüber liegt der Erfindung die Aufgabe zugrunde, eine verbesserte Kompressorschaltung für eine pneumatische Regelvorrichtung eines Fahrzeugs zu schaffen.

Die der Erfindung zugrunde liegende Aufgabe wird mit den Merkmalen des unabhängigen Patentanspruchs gelöst. Bevorzugte Ausführungsformen der Erfindung sind in den abhängigen Patentansprüchen angegeben.

Es wird eine Kompressorschaltung für eine pneumatische Regelvorrichtung eines Fahrzeugs geschaffen, umfassend:
- einen Kompressor,
- einen Druckregler,
wobei der Druckregler zwischen einer Eingangsseite des Kompressors und der pneumatischen Regelvorrichtung angeordnet ist, wobei der Druckregler dazu ausgebildet ist, einen an seiner der pneumatischen Regelvorrichtung zugewandten Seite anliegenden Vordruck von Luft der pneumatischen Regelvorrichtung zu messen und diese Luft mit einem Eingangsdruck der Eingangsseite des Kompressors zuzuführen, wobei der Druckregler dazu ausgebildet ist, den Eingangsdruck in Abhängigkeit von der Messung zu regeln.

Dies kann den Vorteil haben, dass die Auslegung des Kompressors nicht jeweils an sich geänderte Betriebsbedingungen einer pneumatischen Regelvorrichtung eines Fahrzeugs neu ausgelegt werden muss. Denn der Druckregler transformiert z.B. den an seiner der pneumatischen Regelvorrichtung zugewandten Seite anliegenden Vordruck von Luft der pneumatischen Regelvorrichtung, die als nächstes den Kompressor zu passieren hätte, in einen Eingangsdruck des Kompressors, bei welchem der Kompressor die vorzugsweise jeweils größte Leistungsaufnahme realisieren kann. Dies hat weiterhin den Vorteil, dass bei einer Änderung der Betriebsbedingung der pneumatischen Regelvorrichtung eines Fahrzeugs keine baulichen Veränderungen an dem Kompressor vorgenommen werden müssen und somit keine weiteren Kosten bei der Herstellung entstehen. Der Druckregler kann somit gewährleisten, dass unabhängig vom jeweiligen Betriebsmodus der pneumatischen Regelvorrichtung eines Fahrzeugs die jeweils zulässige Leistungsgrenze des Kompressors maximal ausgenutzt werden kann.

Nach einer Ausführungsform der Erfindung ist die Kompressorschaltung zur Verwendung im Betriebsmodus einer geschlossenen Luftversorgung und im Betriebsmodus einer offenen Luftversorgung ausgebildet.

Die beanspruchte Ausführungsform der Erfindung ermöglicht, dass bei der Auslegung des Kompressors initial von der Betriebsbedingung einer offenen Luftversorgung ausgegangen werden kann. Dies impliziert eine Vergrößerung des Hubs und/oder der Bohrung des Kompressors, um die Förderleistung des Kompressors aus der offenen Umgebung im Falle des OLV-Betriebs zu verbessern. Diese Auslegung des Kompressors mit Orientierung auf die Betriebsparameter im OLV-Fall kann auch für den Betriebsmodus einer geschlossenen Luftversorgung verwendet werden, da der Druckregler den Eingangsdruck im GLV-Betrieb den Kompressor wiederum so regelt, dass er unabhängig vom Vordruck ist und die vorgegebene Leistungsgrenze des Kompressors nicht überschritten wird.

Nach dem bisherigen Stand der Technik wird der Kompressor nach den Betriebsbedingungen einer geschlossenen Luftversorgung ausgelegt, da der GLV-Betrieb eine größere Leistungsaufnahme erfordert als der OLV-Betrieb. Die bisherige Auslegung des Kompressors auf den Anwendungsfall eines GLV-Betriebs impliziert jedoch, dass im OLV-Betrieb der Kompressor wesentlich weniger Luft liefert als es seine elektrische Leistungsaufnahme eigentlich zuließe. Im bisherigen Stand der Technik impliziert die Optimierung des Kompressors auf die Verhältnisse im GLV-Betrieb eine gleichzeitige Verschlechterung der Funktionsleistung des Kompressors im OLV-Betrieb. Die beanspruchte Ausführungsform der Erfindung hingegen ermöglicht die Optimierung der Funktionsleistung des Kompressors sowohl im Betriebsmodus einer geschlossenen Luftversorgung als auch im Betriebsmodus einer offenen Luftversorgung.

Nach einer Ausführungsform der Erfindung weist der Kompressor weiter eine Förderleistung auf, wobei der Druckregler dazu ausgebildet ist, den Eingangsdruck des Kompressors in Abhängigkeit von der Messung des Vordrucks so zu regeln, dass kontinuierlich die Förderleistung des Kompressors einer vordefinierten Förderleistung entspricht.

Dies kann den Vorteil haben, dass durch die Regelung des Eingangsdrucks durch den Druckregler eine vordefinierte Förderleistung des Kompressors je nach der gewünschten Höhe der Funktionsleistung des Kompressors einstellbar ist. Der Kompressor könnte unabhängig vom in dem pneumatischen Regelsystem vorherrschenden Druckverhältnissen und unabhängig vom Betriebsmodus wegen der kontinuierlich auf die Optimierung der Leistungsaufnahme des Kompressors hin orientierte Transformation des Vordrucks in einen optimalen Eingangsdruck des Kompressors stets unter Ausnutzung von vordefinierten Leistungsgrenzen arbeiten.

Durch kontinuierliche Messung des Vordrucks und Regulierung des Drucks der in den Kompressor einströmenden Luft aus anderen Komponenten der pneumatischen Regelvorrichtung lässt sich der Druckregler z.B. dazu benutzen, dass durch ihn der Eingangsdruck so geregelt wird, dass die Fahrzeugverstellgeschwindigkeit, die durch die pneumatische Regelvorrichtung bewirkt wird, dem jeweiligen Wunsch des Fahrzeugbenutzers entspricht. In diesem Kontext bedeutet Fahrzeugverstellgeschwindigkeit die Geschwindigkeit, mit welcher das Fahrzeuggestell durch die pneumatische Regelvorrichtung angehoben und gesenkt werden kann.

Nach einer Ausführungsform der Erfindung entspricht die vordefinierte Förderleistung einer oberen zulässigen Leistungsgrenze der Förderleistung des Kompressors.

Durch die Regelung des Eingangsdrucks durch den Druckregler ist somit auch die durch die bauliche Ausstattung des Kompressors vorgegebene maximal zulässige Leistungsgrenze zur Optimierung der Funktionsleistung des Kompressors gezielt einstellbar. Durch den Druckregler lässt sich z.B. die maximale Leistung und damit die maximale Förderleistung des Kompressors regeln. Dies kann den Vorteil haben, dass sowohl im Betriebsmodus einer offenen Luftversorgung als auch im Betriebsmodus einer geschlossenen Luftversorgung die jeweils zulässigen Leistungsgrenzen bei der Förderleistung und Kompression von Luft durch den Kompressor maximal ausgenutzt werden könnten.

Durch kontinuierliche Messung des Vordrucks und Regulierung des Drucks der in den Kompressor einströmenden Luft aus anderen Komponenten der pneumatischen Regelvorrichtung durch den Druckregler wird der Kompressor dazu befähigt, sowohl im OLV-Betrieb eine optimale Förderleistung bei der Beförderung von Luft aus der Umgebung, was nach dem bisherigen Stand der Technik noch nicht gewährleistet wird, als auch im GLV-Betrieb, ohne hier wiederum die Leistungsgrenze zu überschreiten, was nach dem bisherigen Stand der Technik noch ein unlösbares Dilemma darstellt.

Im Falle einer pneumatischen Regelvorrichtung für ein Fahrzeug lässt sich z.B. so in Unabhängigkeit von den vorherrschenden Druckverhältnissen immer die maximal mögliche Fahrzeugverstellgeschwindigkeit einstellen.

Nach einer Ausführungsform der Erfindung ist der Druckregler mechanisch oder elektrisch steuerbar.

Dies kann den Vorteil haben, dass bei einer mechanischen Regelung des Druckreglers zur Einstellung des Eingangsdrucks zum Beispiel im Falle einer pneumatischen Regelvorrichtung für ein Fahrzeug der Fahrzeugbenutzer den Zeitpunkt des Anheben und des Absenkens des Fahrzeuggestells durch die pneumatische Regelvorrichtung sowie die Geschwindigkeit für diese Vorgänge entsprechend den individuellen Anforderungen manuell selbst einstellen kann. Eine elektrische Ansteuerung des Druckreglers, wobei ein Steuergerät mittels des Vordrucks aus einem Kennlinienfeld die Einstellung vornimmt, ermöglicht eine selbständige und automatische Regulierung dieser Fahrzeugverstellgeschwindigkeit in Abhängigkeit von den Anforderungen der Betriebsparameter, die durch das jeweilige Fahrzeugverhalten bestimmt werden, ohne dass der Fahrzeugbenutzer tätig werden muss.

Nach einer Ausführungsform der Erfindung ist der Druckregler ferner dazu ausgebildet, zusätzlich den Eingangsdruck in Abhängigkeit von einer Messung eines an einer Auslassseite des Kompressors anliegenden Drucks von Luft der pneumatischen Regelvorrichtung zu regeln.

Dies kann den Vorteil haben, dass bei der Einstellung des optimalen Eingangsdrucks nicht nur der an der Eingangsseite des Kompressors liegende Druck berücksichtigt wird, sondern auch die jeweils vom Betriebsmodus der pneumatischen Regelvorrichtung abhängigen Druckverhältnisse, die an der Ausgangsseite des Kompressors herrschen, mitberücksichtigt werden. Je nachdem, welcher Regelvorgang gerade im pneumatischen Regelsystem vorliegt, zum Beispiel "Befördern von Druckluft aus dem Druckluftspeicher in das pneumatische Aktuatorensystem", "Beförderung von Druckluft aus dem pneumatischen Aktuatorensystem in den Druckluftspeicher" oder eine" Regenerationsphase des Lufttrockners", kann der Druckregler somit aus der Messung sowohl des Vordrucks als auch des an der Auslassseite des Kompressors vorliegenden Drucks den Eingangsdruck so regeln, dass die Leistungsaufnahme und Förderleistung des Kompressors unabhängig von Vordruck und Gegendruck optimiert wird. Im Falle einer elektrischen Ansteuerung des Druckreglers kann somit ein Steuergerät mittels des Vordrucks und des Gegendrucks aus einem Kennlinienfeld die optimale Einstellung des Eingangsdrucks an der Eingangsseite des Kompressors bestimmen. Die zusätzliche Messung eines an der Auslassseite des Kompressors liegenden Drucks erlaubt somit eine weitere Feinregulierung des Eingangsdrucks an der Eingangsseite des Kompressors zur Einstellung entweder einer vordefinierten Förderleistung oder der maximalen Förderleistung des Kompressors.

Im Folgenden werden bevorzugte Ausführungsformen der Erfindung anhand der folgenden Zeichnung näher erläutert.

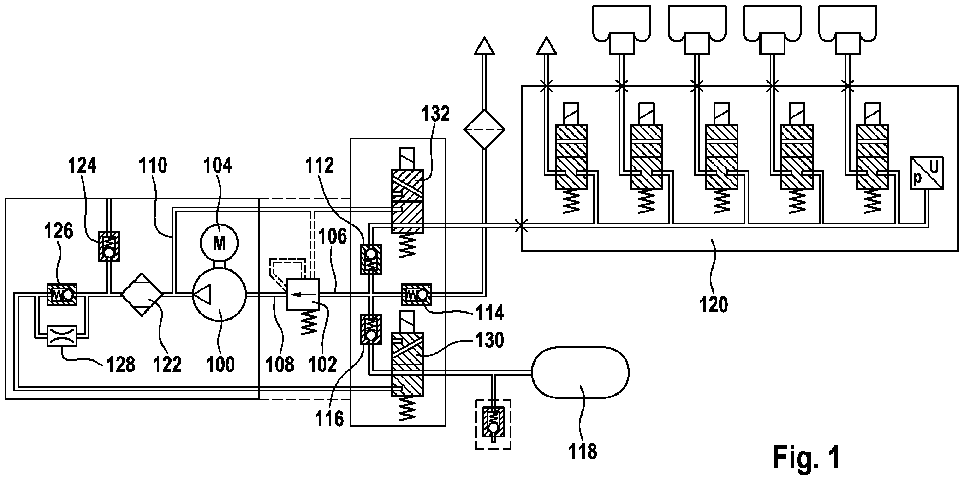

- Figur 1: zeigt ein Schaltbild der Kompressorschaltung mit vorgeschaltetem Druckregler innerhalb einer pneumatischen Regelvorrichtung eines Fahrzeugs.

Die Figur 1 zeigt ein Schaltbild einer Kompressorschaltung in einer pneumatischen Regelvorrichtung eines Fahrzeugs. Dabei ist dem Kompressor 100 ein Druckregler 102 an seiner Eingangsseite vorgeschaltet. An der Eingangsseite des Druckreglers 102 herrscht ein Vordruck 106, der in Abhängigkeit von den Betriebsvorgängen der pneumatischen Regelvorrichtung entweder durch aus der Umgebung einströmenden Luft für das Rückschlagventil 114 zustande kommt in der Anhebungsphase des Fahrzeugs aus dem Druckluftspeicher 118 nach Passage eines 3/2-Wegeventils 130 über ein Rückschlagventil 116 oder in der Absenkungsphase des Fahrzeugs aus dem pneumatischen Aktuatorensystem 120 nach Passage eines 3/2-Wegeventils 132 und eines Rückschlagventils 112 resultiert.

Der Druckregler 102 transformiert den Vordruck 106 in einen an die Leistungsgrenze des Kompressors 100 angepassten Eingangsdruck 108 an der Eingangsseite des Kompressors. Dabei kann der Kompressor 100 mit einen Motor 104 betrieben werden. An der Ausgangsseite des Kompressors 100 herrscht ein Gegendruck 110, der aus Luftströmungen vor und nach einem Lufttrockner 122 und aus dem pneumatischen Aktuatorensystem 120 nach Passage eines 3/2-Wegeventils 132 resultieren kann. Die Unidirektionalität der Luftströme und weiteren Komponenten der pneumatischen Regelvorrichtung wird weiterhin bestimmt durch ein Rückschlagventil 126 und ein Rückschlagventil 124. Eine dem Lufttrockner 122 vorgeschaltete Drossel 128 dient der Entspannung der Luft.

### Bezugszeichenliste

- 100: Kompressor
- 102: Druckregler
- 104: Motor
- 106: Vordruck
- 108: Eingangsdruck
- 110: Gegendruck
- 112: Rückschlagventil
- 114: Rückschlagventil
- 116: Rückschlagventil
- 118: Druckluftspeicher
- 120: pneumatisches Aktuatorensystem
- 122: Lufttrockner
- 124: Rückschlagventil
- 126: Rückschlagventil
- 128: Drossel
- 130: 3/2-Wegeventil
- 132: 3/2-Wegeventil

## Patentansprüche

1. Kompressorschaltung für eine pneumatische Regelvorrichtung eines Fahrzeugs, umfassend:
- einen Kompressor (100),
- einen Druckregler (102),
wobei der Druckregler (102) zwischen einer Eingangsseite des Kompressor (100) und der pneumatischen Regelvorrichtung angeordnet ist, wobei der Druckregler (102) dazu ausgebildet ist, einen an seiner der pneumatischen Regelvorrichtung zugewandten Seite anliegenden Vordruck (106) von Luft der pneumatischen Regelvorrichtung zu messen und diese Luft mit einem Eingangsdruck (108) der Eingangsseite des Kompressor (100) zuzuführen, wobei der Druckregler (102) dazu ausgebildet ist, den Eingangsdruck (108) in Abhängigkeit von der Messung zu regeln, **dadurch gekennzeichnet, dass** der Druckregler (102) im Betriebsmodus einer geschlossenen Luftversorgung dazu ausgebildet ist, den Eingangsdruck (108) des Kompressor (100) derart zu regeln, dass der Eingangsdruck (108) unabhängig vom Vordruck (106) ist und die vorgegebene Leistungsgrenze des Kompressors (100) nicht überschritten wird.

2. Vorrichtung nach Anspruch 1, wobei die Kompressorschaltung zur Verwendung im Betriebsmodus einer geschlossenen Luftversorgung und im Betriebsmodus einer offenen Luftversorgung ausgebildet ist.

3. Vorrichtung nach Anspruch 1, wobei der Kompressor (100) weiter eine Förderleistung aufweist, wobei der Druckregler (102) dazu ausgebildet ist, den Eingangsdruck (108) des Kompressors (100) in Abhängigkeit von der Messung des Vordrucks (106) so zu regeln, dass kontinuierlich die Förderleistung des Kompressors (100) einer vordefinierten Förderleistung entspricht.

4. Vorrichtung nach Anspruch 3, wobei die vordefinierte Förderleistung einer oberen zulässigen Leistungsgrenze der Förderleistung des Kompressors (100) entspricht.

5. Vorrichtung nach Anspruch 1, wobei der Druckregler (102) mechanisch oder elektrisch steuerbar ist.

6. Vorrichtung nach Anspruch 1, wobei der Druckregler (102) ferner dazu ausgebildet ist, zusätzlich den Eingangsdruck (108) in Abhängigkeit von einer Messung eines an einer Auslassseite des Kompressors (100) anliegenden Drucks (110) von Luft der pneumatischen Regelvorrichtung zu regeln.

## Claims

1. Compressor circuit for a pneumatic control device of a motor vehicle, comprising:
- a compressor (100),
- a pressure regulator (102),
wherein the pressure regulator (102) is arranged between an inlet side of the compressor (100) and the pneumatic control device, wherein the pressure regulator (102) is configured to measure an admission pressure (106) of air from the pneumatic control device present on its side oriented towards the pneumatic control device and to supply this air at an inlet pressure (108) to the inlet side of the compressor (100), and wherein the pressure regulator (102) is configured to regulate the inlet pressure (108) in dependence on the measurement, **characterized in that**, in the operating mode of a closed air supply, the pressure regulator (102) is configured to regulate the inlet pressure (108) of the compressor (100) in such a way that the inlet pressure (108) is independent of the admission pressure (106), and the prescribed performance limit of the compressor (100) is not exceeded.

2. Device according to Claim 1, wherein the compressor circuit is configured to be used in the operating mode of a closed air supply and in the operating mode of an open air supply.

3. Device according to Claim 1, wherein the compressor (100) further has a delivery rate, and wherein the pressure regulator (102) is configured to regulate the inlet pressure (108) of the compressor (100) in dependence on the measurement of the admission pressure (106) in such a way that the delivery rate of the compressor (100) corresponds continuously to a predefined delivery rate.

4. Device according to Claim 3, wherein the predefined delivery rate corresponds to an upper admissible performance limit of the delivery rate of the compressor (100).

5. Device according to Claim 1, wherein the pressure regulator (102) is controllable mechanically or electrically.

6. Device according to Claim 1, wherein the pressure regulator (102) is further configured additionally to regulate the inlet pressure (108) in dependence on a measurement of a pressure (110) of air from the pneumatic control device present on an outlet side of the compressor (100).

## Revendications

1. Circuit de compresseur pour un dispositif de régulation pneumatique d'un véhicule, comprenant :
- un compresseur (100),
- un régulateur de pression (102),
le régulateur de pression (102) étant disposé entre un côté d'entrée du compresseur (100) et le dispositif de régulation pneumatique, le régulateur de pression (102) étant réalisé de manière à mesurer une pression préliminaire (106) de l'air du dispositif de régulation pneumatique s'appliquant au niveau de son côté tourné vers le dispositif de régulation pneumatique et de manière à acheminer cet air avec une pression d'entrée (108) au côté d'entrée du compresseur (100), le régulateur de pression (102) étant réalisé de manière à réguler la pression d'entrée (108) en fonction de la mesure, **caractérisé en ce que** le régulateur de pression (102), en mode de fonctionnement d'une alimentation en air fermée, est réalisé de manière à réguler la pression d'entrée (108) du compresseur (100) de telle sorte que la pression d'entrée (108) soit indépendante de la pression préliminaire (106) et que la limite de puissance prédéfinie du compresseur (100) ne soit pas dépassée.

2. Dispositif selon la revendication 1, dans lequel le circuit de compresseur est réalisé pour l'utilisation en mode de fonctionnement d'une alimentation en air fermée et en mode de fonctionnement d'une alimentation en air ouverte.

3. Dispositif selon la revendication 1, dans lequel le compresseur (100) présente en outre une puissance de refoulement, le régulateur de pression (102) étant réalisé de manière à réguler la pression d'entrée (108) du compresseur (100) en fonction de la mesure de la pression préliminaire (106) de telle sorte que la puissance de refoulement du compresseur (100) corresponde constamment à une puissance de refoulement prédéfinie.

4. Dispositif selon la revendication 3, dans lequel la puissance de refoulement prédéfinie correspond à une limite de puissance admissible supérieure de la puissance de refoulement du compresseur (100).

5. Dispositif selon la revendication 1, dans lequel le régulateur de pression (102) peut être commandé mécaniquement ou électriquement.

6. Dispositif selon la revendication 1, dans lequel le régulateur de pression (102) est réalisé en outre de manière à réguler en plus la pression d'entrée (108) en fonction d'une mesure d'une pression (110) d'air du dispositif de régulation pneumatique s'appliquant au niveau d'un côté de sortie du compresseur (100).
